# EUROPEAN PATENT SPECIFICATION

(11) **EP 0 484 860 B1**
(45) Date of publication and mention of the grant of the patent: **01.03.1995**
(21) Application number: 91118782.1
(22) Date of filing: 04.11.1991
(51) Int. Cl.: F25D 29/00, F25D 11/02

(54) **Refrigerating apparatus having a single thermostatic temperature control system**
Kühlgerät mit nur einer thermostatischen Temperaturregelvorrichtung
Appareil frigorifique à dispositif thermostatique unique de régulation de température

(30) Priority: 05.11.1990 IT 4576690
(43) Date of publication of application: 13.05.1992
(73) Proprietor: Zanussi Elettrodomestici S.p.A., I-33170 Pordenone (IT)
(72) Inventor: Marega, Paolo, I-33084 Codenons, Pordenone (IT)
(74) Representative: Grünecker, Kinkeldey, Stockmair & Schwanhäusser Anwaltssozietät

(56) References cited:
- EP-A- 0 387 680
- EP-A- 0 388 726
- FR-A- 2 347 634
- US-A- 4 288 854
- US-A- 4 292 813
- US-A- 4 627 245

## Description

The present invention relates to a refrigerating apparatus comprising a refrigerant circuit with thermostatic temperature control.

In particular, but not exclusively, the invention relates to a refrigerating apparatus operating at two or more temperatures and provided with a single thermostatic control device.

Generally known are twin-purpose refrigerating appliances having two compartments maintained at different temperatures and provided with separate access doors. In general, one of the two compartments, to be designated "the refrigerator cell" or "the cell" in the following, is maintained at a mean temperature of about +5°C for the storage of fresh foods, while the other compartment, to be designated "the freezer" in the following, is maintained at a mean temperature of about -18°C to function as a freezer compartment.

Appliances of this type preferably employ a unitary refrigerant circuit having a single compressor and two series-connected evaporators associated to the cell and freezer compartments, respectively.

In addition, the temperature control operation, which is accomplished by alternating operative and inoperative phases of the compressor, is preferably carried out by a single thermostatic control device acting to directly or indirectly detect the temperature of the evaporator associated to the storage compartment or cell.

In particular, the compressor is activated when the temperature of the cell's evaporator exceeds a certain maximum value, and is deactivated for the execution of a corresponding defrosting operation, when this temperature drops below a certain minimum value. The temperatures within the compartments are determined by the respective durations of the operative and inoperative phases of the compressor as well as by the overall dimensions of the refrigerating appliance, its charging state, and ambient temperature.

In this respect it is known that, when the ambient temperature is particularly low, the thermostatic control device activates the compressor for relatively short periods as compared to its inoperative phases, to thereby maintain the interior of the cell at the preselected mean temperature of about +5°C. This operating mode, however, may result in that the freezer compartment is insufficiently cooled by its associated evaporator, which may impair the quality and storage life of the foods stored in the freezer compartment.

In any case, the long inoperative periods and short operative periods of the compressor in response to particularly low ambient temperatures result in indesirably ample temperature variations in both compartments, contrary to what is desirable for an effective conservation of the stored foods.

In order to eliminate these shortcomings, it is general practice to provide within the cell a so-called "compensator" heater element (usually an electric heater element of relatively low performance, for instance 10 W), which is controlled by the thermostatic control device so as to be energized during the inoperative periods of the compressor.

The supply of heat by the compensator heater element during the defrosting periods of the cell's evaporator is effective to artificially compensate for the low ambient temperature and thus conducive to establish a more suitable relationship between the operative and inoperative periods of the compressor, to result in adequate cooling of the freezer compartment, and in general in a reduced fluctuation of the temperatures in both compartments.

On the other hand, however, this arrangement leads to an undesirable waste of energy as long as the ambient temperature is relatively high.

With a view to overcoming this disadvantage it has been proposed, as described for instance in EP-A-0.388.726, to employ timing means acting to energize the thermal compensator element with a predetermined delay after each deactivation of the compressor. By suitably dimensioning the entire system it is thus possible to automatically control the energization of the compensator element only when actually needed, so that any undesirable waste of energy is avoided.

This solution is advantageously simple and effective as compared to other known solutions, but does in itself present certain shortcomings. As a matter of fact, since under certain conditions the compensator element is activated with a considerable delay during long inoperative periods of the compressor, it would be preferable for the heater element to have a relatively high output (for example 20 W) to enable it to establish an effective thermal compensation. Inasmuch as for reasons of space requirement and facility of mounting the compensator element should rather be of compact construction, its relatively high heat output may result in localized overheating phenomena within the cell, with the danger of spoilage of foods and damage of closely located plastic components. These phenomena, which may be of a magnitude preventing existing standards to be complied with, are thus at variance with the above substantiated requirement for the compensator element to be overdimensioned.

It is an object of the present invention to provide a refrigerating apparatus having a single thermostatic temperature control system of particular simplicity and reliability, capable of giving optimum performance regardless of ambient temperature variations and without requiring any of its components to be overdimensioned.

According to the invention, this object is attained by a refrigerating apparatus incorporating the characteristics set forth in the appended claim 1.

The advantages of the invention will become more clearly evident from the following description, given by way of example with reference to the accompanying drawings, wherein:
- fig. 1: shows a diagrammatic illustration of a refrigerating apparatus according to a preferred embodiment of the invention, and
- fig. 2: shows a preferred embodiment of circuitry for the control of the apparatus depicted in fig. 1.

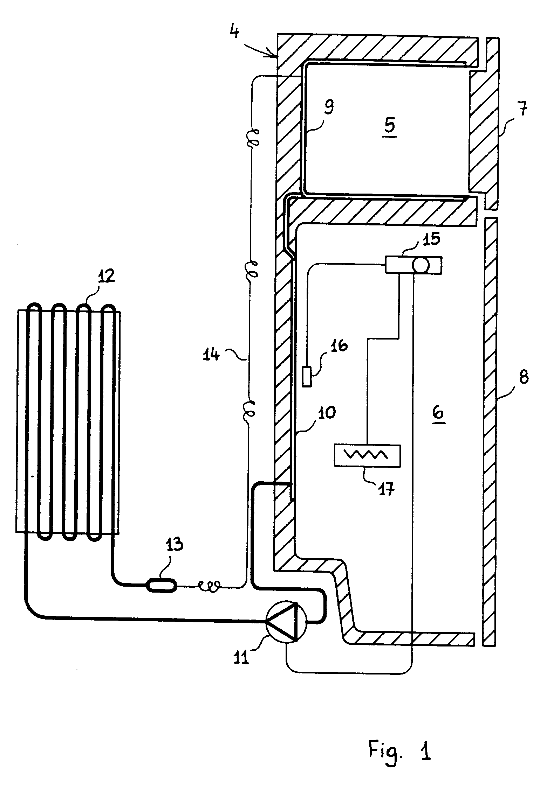

With reference to fig. 1, a refrigerating apparatus has an insulated housing 4 preferably enclosing two separate compartments 5 and 6 acting as "the freezer" and "the cell", respectively. Compartments 5 and 6 are provided with separate access doors 7 and 8, respectively, and associated evaporators 9 and 10, respectively. The latter are interconnected in series in a refrigerant circuit additionally including a compressor 11, a condenser 12, a dehumidifying filter 13 and a refrigerant flow laminator element 14.

The refrigerant apparatus is further provided with a control device 15 preferably located within cell compartment 6 and operatively connected to a single thermostatic control element, for instance a sensor 16. The latter is preferably located adjacent evaporator 10 of cell compartment 6 for indirectly sensing its temperature, and control device 15 is operable to control the operation of compressor 11 with alternating operative and inoperative periods for establishing respective phases during which compartments 5 and 6 are cooled, and phases during which evaporator 10 associated to cell compartment 6 is defrosted.

In particular, control device 15 is devised to activate compressor 11 when the temperature sensed by sensor 16 exceeds a predetermined value A, and to deactivate the compressor when the temperature sensed by sensor 16 drops below a second predetermined value B, the value A being higher than value B.

Depending on the relationship between the operative and inoperative periods of compressor 11 as well as on the overall dimensions of the apparatus, its charging state and ambient temperature, compartments 5 and 6 are normally maintained at mean temperatures of about -18°C and +5°C, respectively.

The refrigerating apparatus further comprises heater means 17, preferably in the form of a simple electric resistance heater of low output (for instance 10 W) for thermal compensation within cell compartment 6. Heater means 17 is controlled by control device 15 in the manner to be described.

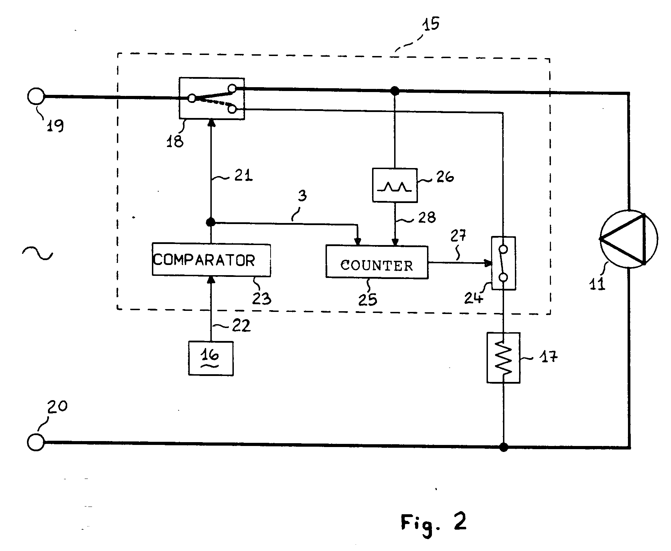

In a preferred embodiment of the invention, control device 15 is of a construction as depicted in fig. 2, wherein a controlled commutator 18, for instance of the electronic type, is operable to apply the voltage derived from the terminals 19 and 20 of an electric power source, alternatively to compressor 11 or to heater means 17.

In particular, commutator 18 is operable to switch between a first and a second state for the energization of compressor 11 or resistance heater 17 in response to a respective logic signal "0" or "1" being applied to an input terminal 21 thereof.

Sensor 16 is preferably of the thermistor type (for instance a PTC) operable in a per se known manner to generate a signal corresponding to the sensed temperature to be applied to a control input 22 of a threshold value stage 23 comprising for example a hysteresis comparator having its output connected to input 21 of controlled commutator 18. Comparatos stage 18 acts in a per se known manner to generate a logic signal "0" or "1" at its output (indicated at 21 in fig. 2 in analogy to the associated control input of commutator 18) in response, respectively, to a signal representative of a temperature above value A or below value B being applied to its input 22 by sensor 16.

Compensator resistance heater 17 is connected to commutator 18 through a normally closed controllable circuit breaker 24 (for example a TRIAC or a relay) itself controlled by the output 27 of a pulse counter 25.

Pulse counter 25 has a reset input 3 connected to output 21 of comparator 23 and a counter input 28 connected to a pulse generator 26, the latter being energized through commutator 18 when in its first position as shown in fig. 2. Pulse generator 26 may for instance act to generate respective pulses in response to each half-wave of the energizing voltage supplied at terminals 19, 20.

According to an aspect of the invention, counter 25 is devised to produce at its output 27 a control signal for causing circuit breaker 24 to open after having counted a number of N pulses received at its input 28. In a per se known manner, this control signal persists until counter 25 is reset. In the described example, counter 25 is adapted to be reset in response to its reset input being switched from logic level "1" to logic level "0".

In other words, circuit breaker 24 is only caused to open when compressor 11 is in continuous operation for a minimum period of time T corresponding to the above indicated count of N pulses, and returns to its closed state in response to counter 25 being reset. Counter 25 may for example be devised to count the indicated number of N pulses during a period of time T of about 50 to 60 minutes.

The operation of the refrigerating apparatus according to the invention is obvious. When sensor 16 detects a temperature exceeding the specified value A, comparator 23 produces a logic output signal "0" causing counter 25 to be reset, and commutator 18 supplies energizing power to pulse generator 26 and to compressor 11. The operation of compressor 11 results in compartments 5 and 6 being cooled for a period of time the duration of which is controlled by counter 25 having the pulses generated by pulse generator 26 supplied thereto.

In the conventional manner, this cooling period continues until sensor 16 detects a temperature below the specified value B, at which time the output of comparator 23 assumes the logic level "1", causing commutator 18 to switch to the state indicated by a dotted line in fig. 2. This causes compressor 11 to be deenergized to thereby initiate the defrosting of evaporator 10 associated to cell compartment 6, with a resultant gradual rise of its temperature.

Likewise in the conventional manner, the refrigerating apparatus is dimensioned so as to ensure that under normal operating conditions the duration of each refrigerating phase is longer than the above specified minimum period T.

Under such normal operating conditions, the duration of each refrigerating phase is thus sufficient for counter 25 to count the above specified number of N pulses, and to thereby cause circuit breaker 24 to open.

Still under normal operating conditions, compensator resistance heater 17 remains advantageously inoperative during each defrosting phase to thereby avoid undesirable waste of energy.

Each defrosting phase is terminated as soon as sensor 16 again detects a temperature exceeding the value A, causing comparator 23 to generate logic level "0" at its output, as a result of which counter 25 is reset and commutator 18 is switched to the state for the energization of compressor 11. The resetting of counter 25 is of course effective to cause circuit breaker 24 to be switched to its normally closed state, whereupon the operation of the apparatus as a whole proceeds as described above.

Whenever, for example under particularly low ambient temperature conditions, the duration of a refrigerating phase is too short, i.e. shorter than the specified minimum period T, counter 25 is not permitted to count the specified number of N pulses, so that circuit breaker 24 remains in its normally closed state.

At the beginning of the succeeding inoperative phase of compressor 11, compensator resistance heater 17 is therefore energized by way of commutator 18 and circuit breaker 24, to thereby heat cell compartment 6 and accelerate the temperature rise therein.

In contrast to what occurs in the solution described in the cited publication EP-A-0.388.726, resistance heater 17 is thus energized for the full duration of each inoperative phase of compressor 11 during which a thermal compensation is required in cell compartment 6. Resistance heater 17 is thus capable of providing an efficient thermal compensation, solely when necessary, while having an advantageously low output to eliminate any danger of localized overheating phenomena within the appliance.

From what has been described above, it is also apparent that the refrigerating apparatus according to the is of very simple construction to ensure reliable operation.

It is obvious to one skilled in the art that the various control components and elements may be of types other than described and/or differently dimensioned if so required.

The refrigerating apparatus itself may also be of different construction, comprising for instance only a single cell compartment 6 or a plurality of such compartments.

## Claims

1. A refrigerating apparatus comprising operative components controlled by a single thermostatic temperature control device (15) disposed within one compartment for maintaining said compartment at a preselected mean temperature by means of alternating operative and inoperative phases of a refrigerant circuit, said control device (15) comprising control components (24-26) permitting the activation of heater means (17) for the thermal compensation of said compartment solely for the full duration of each of said inoperative phases succeeding a respective operative phase having a duration of less than a predetermined period of time (T).

2. A refrigerating apparatus according to claim 1, wherein said thermal compensator means comprises at least one electric resistance heater (17) and said control device (15) comprises commutator means (18) operable to alternatively energize said resistance heater or a compressor (11) of said refrigerant circuit, characterized in that said commutator means (18) is connected to said compensator resistance heater (17) through a normally closed controlled circuit breaker (24) operable to open in response to a control signal, counter means (25) being activated during each operative phase of said refrigerant circuit for generating said control signal when said operative phase has a duration of more than said predetermined period of time (T).

3. A refrigerating apparatus according to claim 2, wherein said commutator means (18) is controlled by comparator means (23) itself controlled by said thermostatic control device (15) for the execution of said alternating operative and inoperative phases, characterized in that said comparator means (23) additionally control a reset input (3) of said counter means (25) for resetting the latter on termination of each inoperative phase.

## Patentansprüche

1. Kühlgerät mit Betriebsbauteilen, die von einer einzigen Thermostattemperaturregeleinrichtung (15) gesteuert werden, die in einem Abteil angeordnet ist, um dieses Abteil auf einer vorgewählten mittleren Temperatur durch alternierende Betriebs- und Pausenphasen eines Kühlkreises zu halten, wobei die Regelvorrichtung (15) Regelkomponenten (24-26) enthält, die die Aktivierung einer Heizeinrichtung (17) für die thermische Kompensation dieses Abteils nur für die volle Dauer jeder Pausenphase erlaubt, die an eine entsprechende Betriebsphase anschließt, die eine Dauer hat, die geringer als eine vorbestimmte Zeitdauer (T) ist.

2. Kühlgerät nach Anspruch 1, bei dem die thermische Kompensationseinrichtung wenigstens einen elektrischen Widerstandsheizer (17) enthält und die Regelvorrichtung (15) einen Umschalter (18) enthält, der alternativ den Widerstandsheizer oder einen Kompressor (11) des Kühlkreises mit Strom versorgt, **dadurch gekennzeichnet**, daß der Umschalter (18) mit dem Kompensationswiderstandsheizer (17) über einen normalerweise geschlossenen, gesteuerten Ausschalter (24) verbunden ist, der dazu eingerichtet ist, in Abhängigkeit von einem Steuersignal zu Öffnen, und ferner enthaltend einen Zähler (25), der während jeder Betriebsphase des Kühlkreises aktiviert wird, um das Steuersignal zu erzeugen, wenn die Betriebsphase eine Dauer hat, die größer als die vorbestimmte Zeitdauer (T) ist.

3. Kühlgerät nach Anspruch 2, bei dem der Umschalter (18) durch einen Komparator (23) gesteuert wird, der seinerseits durch die Thermostatregelvorrichtung (15) gesteuert wird, um die Betriebs- und Pausenphasen alternierend auszuführen, **dadurch gekennzeichnet,** daß der Komparator (23) außerdem einen Rücksetzeingang (3) des Zählers (25) steuert, um letzteren bei Beendigung jeder Pausenphase rückzusetzen.

## Revendications

1. Appareil frigorifique comprenant des composants fonctionnels commandés par un seul dispositif de régulation thermostatique de température (15) disposé à l'intérieur d'un compartiment pour maintenir ledit compartiment à une température moyenne présélectionnée au moyen de phases alternées de marche et d'arrêt d'un circuit réfrigérant, ce dispositif de régulation (15) comprenant des composants de commande (24-26) permettant la mise en marche de moyens chauffants (17) pour la compensation thermique dudit compartiment seulement pendant toute la durée de chaque phase d'arrêt succédant à une phase de marche respective ayant une durée inférieure à un laps de temps prédéterminé (T).

2. Appareil frigorifique selon la revendication 1, dans lequel les moyens de compensation thermique comprennent au moins une résistance électrique chauffante (17) et le dispositif de régulation (15) comprend des moyens de commutation (18) fonctionnant pour alimenter alternativement la résistance chauffante ou un compresseur (11) de ce circuit réfrigérant, caractérisé en ce que les moyens de commutation (18) sont raccordés à la résistance chauffante de compensation (17) par l'intermédiaire d'un rupteur de circuit commandé normalement fermé (24) pouvant être actionné pour s'ouvrir en réponse à un signal de commande, des moyens de compteur (25) étant actionnés pendant chaque phase active du circuit réfrigérant pour produire le signal de commande lorsque la phase active a une durée supérieure au laps de temps prédéterminé (T).

3. Appareil frigorifique selon la revendication 2, dans lequel les moyens de commutation (18) sont commandés par des moyens de comparateur (23), eux-mêmes commandés par le dispositif de régulation thermostatique (15) pour l'exécution de ses phases de marche et d'arrêt alternées, caractérisé en ce que les moyens de comparateur (23) commandent également une entrée de réinitialisation (3) des moyens de compteur (25) pour réinitialiser ces derniers à la fin de chaque phase d'arrêt.
